**Europäisches Patentamt**

**European Patent Office**

**Office européen des brevets**

(19)

(11) Veröffentlichungsnummer: **0 215 142
B1**

(12)

# EUROPÄISCHE PATENTSCHRIFT

(45) Veröffentlichungstag der Patentschrift:
06.06.90

(51) Int. Cl.⁵: **A01D 63/04**

(21) Anmeldenummer: 85111634.3

(22) Anmeldetag: **14.09.85**

(54) Halmteiler für landwirtschaftliche Maschinen.

(43) Veröffentlichungstag der Anmeldung:
25.03.87 Patentblatt 87/13

(45) Bekanntmachung des Hinweises auf die Patenterteilung:
06.06.90 Patentblatt 90/23

(84) Benannte Vertragsstaaten:
DE FR GB IT

(56) Entgegenhaltungen:
FR-A- 363 501
FR-A- 586 411
FR-A- 738 801
FR-A- 1 278 492
FR-A- 2 155 588
US-A- 2 281 660
US-A- 2 298 121

(73) Patentinhaber: DEERE & COMPANY, 1 John Deere Road,
Moline, Illinois 61265(US)

(72) Erfinder: Emmert, Walter, Danziger Strasse 9,
D- 6662 Contwig(DE)

(74) Vertreter: Sartorius, Peter, DEERE & COMPANY
European Office, Patent Department
Postfach 503 Steubenstrasse 36-42,
D-6800 Mannheim 1(DE)

## Beschreibung

Die Erfindung bezieht sich auf eine landwirtschaftliche Maschine mit einem an einer Tragvorrichtung vorgesehenen vertikal verschwenkbaren Arbeitswerkzeug, insbesondere Mähdrescher, mit einem Halmteiler, wobei an der Maschine mit horizontalem Abstand eine erste und eine zweite Halterung angeordnet sind und die Tragvorrichtung mit ihrem dem Arbeitswerkzeug abgelegenen Ende an der ersten Halterung angeordnet und in einem in der zweiten Halterung vorgesehenen allseits geschlossenen, vertikal verlaufenden Längsschlitz geführt ist.

Bei dieser bekannten landwirtschaftlichen Maschine (FR-A 1 278 492) ist das Arbeitswerkzeug als an einem Schneidwerkstisch eines Mähdreschers gelenkig angeordneter, sogenannter langer Halmteiler ausgebildet. Halmteiler dienen dazu, noch nicht abgeschnittenes Erntegut in Richtung auf den Schneidwerksbalken zu leiten, und sie müssen, um ihre Aufgabe erfüllen zu können, kurz oder lang und jedenfalls vielseitig ein- bzw. verstellbar sein. Lange Halmteiler werden vornehmlich zum Erfassen von auf dem Boden liegendem Erntegut eingesetzt und müssen hierzu im Einsatz eine entsprechende Höhe an ihrer Spitze aufweisen, die so zu wählen ist, daß liegendes Gut in die Bewegungsbahn des Schneidwerksbalkens geleitet wird, ohne daß die Spitze tief in den Boden eindringt, die Spitze aber bei dem Auftreffen auf Hindernisse, wie Bodenunebenheiten, Steine usw., nach oben ausweichen kann, um Beschädigungen auszuschließen. Hierzu ist das dem Halmteiler abgelegene Ende der Tragvorrichtung in der ersten Halterung auf einem horizontalen Bolzen gelagert, so daß die Verstellmöglichkeit der Tragvorrichtung durch die Höhe des Längsschlitzes in der zweiten Halterung begrenzt ist. Hinzu kommt, daß die Tragvorrichtung im Einsatz auf einem verstellbaren Anschlag in dem Längsschlitz aufliegt. Dabei muß der Anschlag um so höher in dem Längsschlitz eingestellt werden, je weiter der Halmteiler nach vorne ragt. Dadurch wiederum wird zunächst die vertikale Ausweichmöglichkeit beim Auftreffen auf Hindernisse begrenzt bzw. je nach Stellung des Anschlages ganz ausgeschlossen. Da andererseits infolge der Gegebenheiten bei landwirtschaftlichen Maschinen der Längsschlitz auch nicht beliebig lang ausgebildet werden kann, ist es durchaus möglich, daß der Verstellweg nach oben nicht mehr ausreicht, insbesondere wenn auch unterschiedliche Mindesteinstellhöhen für den Schneidwerkstisch erforderlich sind.

Bei Ährenhebern ist es bekannt (FR-A 363 501), die Tragvorrichtung um einen horizontalen Bolzen im Einsatz verschwenken zu können, wobei die Tragvorrichtung zwischen zwei Backen seitlich geführt ist. Damit die Ährenheber bei Bedarf leicht an das Schneidwerk montiert oder von diesem abgenommen werden können, ist die Tragvorrichtung über eine nach oben offene Öse um den Bolzen verschwenkbar.

Die mit der Erfindung zu lösende Aufgabe wird darin gesehen, den Schwenkbereich des an die gattungsbildende landwirtschaftliche Maschine angeschlossenen Arbeitswerkzeuges mit einfachen Mitteln zu vergrößern. Diese Aufgabe ist nach der Erfindung dadurch gelöst worden, daß das Ende der Tragvorrichtung in der ersten Halterung höhenbeweglich angeordnet ist. Auf diese Weise ist die Tragvorrichtung in beiden Halterungen schwimmend gelagert. Als Folge ergibt sich ein erheblich vergrößerter Verstellweg nach oben und als weiterer Vorteil, daß das Arbeitswerkzeug beim Auftreffen auf Hindernisse leicht nach oben ausweichen kann, solange die zweite Halterung die Tragvorrichtung wippenartig lagert und das Ende der Tragvorrichtung in der ersten Halterung nach unten schwenken kann.

Damit die höhenbewegliche Anordnung des Tragvorrichtungsendes leicht bewerkstelligt werden kann, ist nach einem weiteren Vorschlag der Erfindung die erste Halterung mit einem vertikal verlaufenden Längsschlitz zur Aufnahme des Endes der Tragvorrichtung versehen, wobei das Ende der Tragvorrichtung als durch den mit Bezug auf die Fahrtrichtung hinten liegenden Längsschlitz der ersten Halterung sich erstreckender Flansch ausgebildet ist, der ein Sicherungselement aufweist, das eine Vorwärtsverstellung der Tragvorrichtung verhindert.

Vorteilhaft ist es ferner, daß eine untere Begrenzungskante des Längsschlitzes der zweiten Halterung mit Bezug auf die Standfläche des Mähdreschers geneigt verlaufend angeordnet ist. Durch die geneigt verlaufende Begrenzungskante des vorderen Längsschlitzes wird eine ratterfreie Auflage für die Tragvorrichtung des Halmteilers geschaffen, da durch die Neigung der Begrenzungskante die Tragvorrichtung stets gegen die untere geneigt verlaufende Begrenzungskante sowie die außen liegende, vertikal verlaufende Begrenzungskante des Längsschlitzes anliegt.

Im folgenden wird die Erfindung anhand von einen Ausführungsweg darstellenden Zeichnungen näher erläutert. Es zeigt:

Fig. 1 eine perspektivische Darstellung eines Mähdreschers mit einer als Schneidwerksplattform ausgerüsteten Erntebergungsvorrichtung, an der ein Halmteiler höhenverschwenkbar gelagert ist,

Fig. 2 eine perspektivische Darstellung der rechten Seite des vorderen Endes der Schneidwerksplattform mit dem erfindungsgemäßen Halmteiler und

Fig. 3 den Halmteiler in verschiedenen Arbeitsstellungen.

In der Zeichnung ist mit 10 ein Mähdrescher bezeichnet, der zwei vordere Laufräder 12 und zwei hintere steuerbare Laufräder 14 aufweist. Am vorderen Ende weist der Mähdrescher 10 eine Erntebergungsvorrichtung 16 auf, die aus einer Schneidwerksplattform 18 mit einem Schrägfördergehäuse 20 besteht, das an das vordere Ende des Mähdreschers 10 vertikal schwenkbar angeschlossen ist. Oberhalb des Schrägfördergehäuses 20 befindet sich eine Fahrerplattform 22 mit den einzelnen in der Zeichnung nicht weiter dargestellten Bedienungselementen. Die Schneidwerksplattform 18 besteht aus einem Boden 24 mit vertikal verlaufenden Seitenwänden 26 und 28. Zwischen den Seitenwänden 26 und 28 ist ein Schneidwerksbalken 30 angeordnet. An der rechten und linken Seitenwand 26 und 28 ist je ein Halmteiler 32 schwenkbar gelagert. In der nachfolgenden Beschreibung ist lediglich der rechte Halmteiler, der mit dem linken Halmteiler identisch ist, näher beschrieben. Der Halmteiler 32 besteht aus einer als Tragrohr ausgebildeten Tragvorrichtung 34, an deren vorderen Ende ein Torpedoblech 36 verstellbar angeschlossen ist. Das Torpedoblech 36 ist hierzu über eine in der Zeichnung nicht dargestellte Gelenkverbindung mit dem vorderen Ende der Tragvorrichtung verbunden. Im mittleren Bereich stützt sich das Torpedoblech 36 auf dem Tragrohr bzw. der Tragvorrichtung 34 ab. Hierzu ist zwischen dem Torpedoblech und dem Tragrohr bzw. ein Teleskoprohr bzw. ein längenveränderliches Gestänge 38 vorgesehen, das aus zwei Gestängeteilen besteht, die mittig über Schraubenbolzen 40 lösbar und einstellbar miteinander verbunden sind. An der Außenseite der Tragvorrichtung 34 ist ein sich in Arbeitsrichtung des Mähdreschers 10 erstreckendes Abweisblech 42 und an der Innenseite ein Innenabweiser 44 fest angeordnet. Der Innenabweiser 44 ist über eine Strebe 46 zusätzlich mit der Tragvorrichtung 34 fest verbunden.

An der linken sowie an der rechten Seitenwand 26 bzw. 28 befinden sich zwei mit Abstand zueinander angeordnete Halterungen 50 und 52, die aus je einem seitlich herausstehenden, vertikal verlaufenden Stegblech gebildet sein können. Die beiden Halterungen 50 und 52 sind entweder über Schraubenbolzen mit der Seitenwand 28 lösbar verbunden oder an die Seitenwand fest angeschweißt. Die mit Bezug auf die Fahrtrichtung vordere oder zweite Halterung 52 sowie die hintere oder erste Halterung 50 weisen je einen rechteckförmig ausgebildeten Längsschlitz 54 und 56 auf. Der vordere sowie der hintere Längsschlitz 54 und 56 werden durch je zwei vertikal verlaufende Kanten 58 und 60 begrenzt. Die beiden Kanten 58 und 60 sind durch eine obere und eine untere Begrenzungskante 62 und 64 miteinander verbunden. Die untere Begrenzungskante 64 der zweiten Halterung 52 ist mit Bezug auf die Standfläche des Mähdreschers geneigt verlaufend angeordnet, d.h. sie bildet mit der außen liegenden Begrenzungskante 58 einen nach oben offenen spitzen Winkel. Hierdurch wird gewährleistet, daß die Tragvorrichtung 34 stets gegen die außen liegende Kante 58 und die untere Begrenzungskante 64 anliegt, so daß hierdurch eine ratterfreie Auflage für die Tragvorrichtung 34 geschaffen wird.

Die Tragvorrichtung 34, die aus einem im Querschnitt kreisrunden Tragrohr gebildet ist, weist an ihrem hinteren freien Ende einen Flansch 70 auf, der sich durch den Längsschlitz 56 der ersten Halterung 50 erstreckt und vertikal verlaufend ausgerichtet ist. Der Flansch 70 kann dabei geringfügig kleiner als der Längsschlitz 56 sein, so daß er ohne Verkanten auf einfache Weise in dem Längsschlitz sich auf- und abwärts bewegen kann. Damit die Tragvorrichtung 34 nicht aus dem Längsschlitz 54 herausrutschen kann, ist hinter der Halterung 50 in dem Flansch eine Bohrung zur Aufnahme eines Sicherungselementes 72 vorgesehen. Das Sicherungselement 72 kann als Federsplint ausgebildet sein. Die Rückwärtsverstellung der Tragvorrichtung 34 wird durch die Anlage der Stirnfläche der Tragvorrichtung gegen die vordere Seite der Halterung 50 begrenzt. Auf diese Weise erhält man mit einfachen baulichen Mitteln eine Arretierung der Tragvorrichtung in Längsrichtung des Mähdreschers 10.

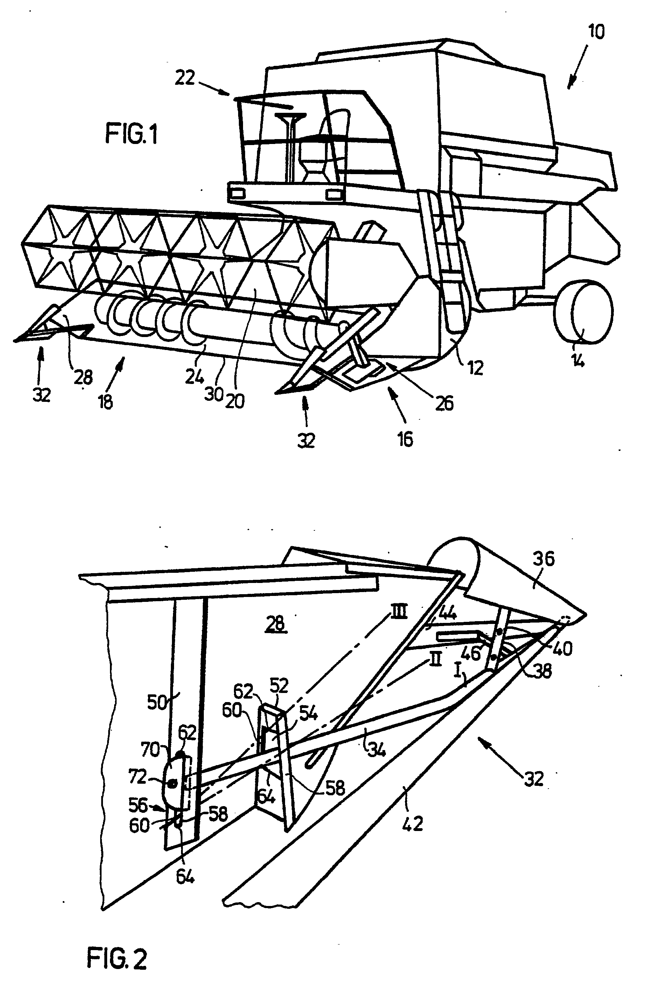

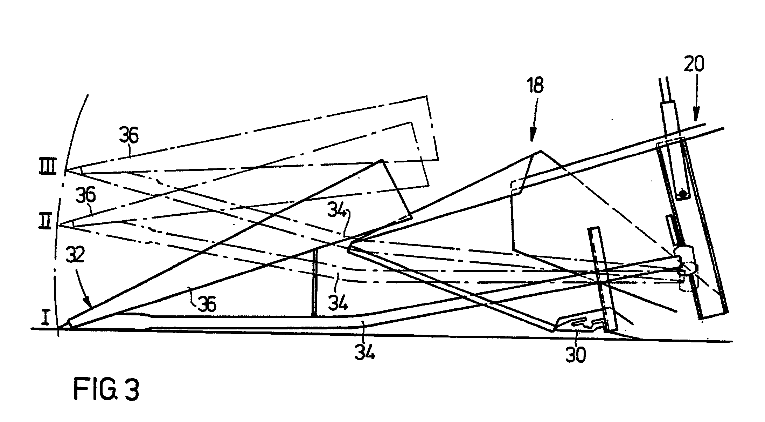

Wie insbesondere aus den Figuren 2 und 3 hervorgeht, liegt der Halmteiler, solange er keine Bodenberührung hat, mit dem hinteren Ende der Tragvorrichtung 34 gegen die obere Begrenzungskante 62 der ersten Halterung 50 an, während der mittlere Teil der Tragvorrichtung 34 gegen die geneigt verlaufende untere Begrenzungskante 64 der zweiten Halterung 52 anliegt. Sobald die Schneidwerksplattform 18 weiter abgesenkt wird und dabei der Halmteiler 32 auf der Bodenoberfläche aufliegt, schwenkt je nach Absenkung der Schneidwerksplattform die Tragvorrichtung 34 um die untere geneigt verlaufende Begrenzungskante 64 der zweiten Halterung 52, bis die Tragvorrichtung 34 mit ihrem hinteren Ende gegen die untere Begrenzungskante 64 der ersten Halterung 50 zur Anlage kommt. Bei diesem Schwenkvorgang hat sich der Halmteiler 32 aus der Stellung I in die Stellung II bewegt (siehe Fig. 2 und 3). Da die zweite Halterung 52 mit relativ großem Abstand zur ersten Halterung 50 angeordnet ist, wird ein großer Teil des Gewichtes des Halmteilers 32 von der zweiten Halterung 52 aufgenommen, so daß das Auflagegewicht des Halmteilers 32 auf dem Boden entsprechend klein ist. D.h. die Verstellung des Halmteilers 32 in dem Bereich zwischen I und II entspricht einer Schwimmstellung. Treten größere Hindernisse auf, die eine Verstellung des Halmteilers 32 in eine Position gemäß III in Fig. 3 bewirken, so schwenkt die Tragvorrichtung 34, die nunmehr mit ihrem hinteren Ende gegen die untere Begrenzungskante 64 der ersten Halterung 50 anliegt, um diese untere Begrenzungskante 64, wobei der mittlere Teil der Tragvorrichtung 34 sich von der unteren Begrenzungskante 64 der zweiten Halterung 52 allmählich wegbewegt, bis die Tragvorrichtung mit ihrer Oberfläche gegen die obere Begrenzungskante 62 der zweiten Halterung 52 zur Anlage kommt. Dabei wird ein kleinerer Gewichtsanteil des Halmteilers 32 von der Halterung 50 aufgenommen. Daraus ergibt sich auch, daß die Stellkraft zur Aufwärtsverschwenkung des Halmteilers 32 von der Position II in die Position III größer ist als die Stellkraft zur Aufwärtsverschwenkung des Halmteilers aus der Position I in die Position II. Beim Stellvorgang des Halmteilers 32 aus der Position II in die Position III wandert also der Schwenkpunkt von der Auflagestelle der Tragvorrichtung 34 auf der unteren Begrenzungskante 64 der zweiten Halterung 52 zur ersten Halterung 50. Durch die vorteilhafte Anordnung der beiden mit Abstand zueinander angeordneten Halterungen 50 und 52 kann also in dem Stellbereich zwischen den Positionen I und II die Auflagekraft so bestimmt werden, daß die Stellkräfte zur Aufwärtsverschwenkung des Halmteilers 32 klein gehalten werden können, um somit Beschädigungen an dem Halmteiler zu vermeiden. Die Stellkräfte zur Aufwärtsverstellung des Halmteilers 32 werden um so kleiner, je weiter die zweite Halterung 52 nach vorne verschoben wird.

Die in Fig. 2 dargestellte Anordnung zur Aufnahme des Halmteilers ist auch für andere Arbeitswerkzeuge von Erntebergungsmaschinen oder auch Bodenbearbeitungsgeräten möglich, wenn beispielsweise durch entsprechende Wahl von Halterungen die Auflagekräfte des Arbeitswerkzeuges beeinflußt werden sollen, um beispielsweise die Stellkräfte zur Aufwärtsverschwenkung des Arbeitswerkzeuges zu verringern. Es ist also beispielsweise möglich, durch eine entsprechende Anordnung der beiden Halterungen die Lagerung eines Spurreißers für eine Sämaschine zu bilden, um somit die Stellkräfte zur Aufwärtsverschwenkung des Spurreißers gering zu halten.

## Patentansprüche

1. Landwirtschaftliche Maschine mit einem an einer Tragvorrichtung (34) vorgesehenen vertikal verschwenkbaren Arbeitswerkzeug, insbesondere Mähdrescher (10), mit einem Halmteiler (32), wobei an der Maschine mit horizontalem Abstand eine erste und eine zweite Halterung (50, 52) angeordnet sind und die Tragvorrichtung (34) mit ihrem dem Arbeitswerkzeug abgelegenen Ende an der ersten Halterung (50) angeordnet und in einem in der zweiten Halterung (52) vorgesehenen allseits geschlossenen, vertikal verlaufenden Längsschlitz (54) geführt ist, dadurch gekennzeichnet, daß das Ende der Tragvorrichtung (34) in der ersten Halterung (50) höhenbeweglich angeordnet ist.

2. Landwirtschaftliche Maschine nach Anspruch 1, dadurch gekennzeichnet, daß die erste Halterung (50) mit einem vertikal verlaufenden Längsschlitz (56) zur Aufnahme des Endes der Tragvorrichtung (34) versehen ist.

3. Landwirtschaftliche Maschine nach Anspruch 2, dadurch gekennzeichnet, daß das Ende der Tragvorrichtung (34) als durch den mit Bezug auf die Fahrtrichtung hinten liegenden Längsschlitz (56) der ersten Halterung (50) sich erstreckender Flansch (70) ausgebildet ist, der ein Sicherungselement (72) aufweist, das eine Vorwärtsverstellung der Tragvorrichtung (34) verhindert.

4. Landwirtschaftliche Maschine nach Anspruch 2, dadurch gekennzeichnet, daß eine untere Begrenzungskante (64) des Längsschlitzes (54) der zweiten Halterung (52) mit Bezug auf die Standfläche des Mähdreschers (10) geneigt verlaufend angeordnet ist.

## Claims

1. Agricultural machine, especially a combine harvester (10), with a vertically pivoted working implement, provided on a support device (34), with a crop divider (32), wherein there are arranged on the machine a first and a second retainer (50, 52) horizontally spaced and the support device (34) is arranged with its end remote from the working implement on the first retainer (50) and is guided in a vertically extending slot (54) closed on all sides, provided in the second retainer (52), characterized in that the end of the support device (34) is arranged at a movable height in the first retainer (50).

2. Agricultural machine according to claim 1, characterized in that the first retainer (50) is provided with a vertically extending slot (56) for receiving the end of the support device (34).

3. Agricultural machine according to claim 2, characterized in that the end of the support device (34) is formed as a flange (70) extending through the slot (56) of the first retainer (50) lying to the rear with reference to the direction of travel, which flange has a securing element (72) which prevents forward displacement of the support device (34).

4. Agricultural machine according to claim 2, characterized in that a lower limiting edge (64) of the slot (54) of the second retainer (52) is arranged at an inclination with reference to the standing surface of the combine harvester (10).

## Revendications

1. Machine agricole comportant un outil de travail pouvant pivoter verticalement prévu sur un dispositif de support (34), en particulier moissonneuse-batteuse (10), comportant un diviseur d'épis (32), une première fixation et une seconde fixation (50, 52) étant placées sur la machine à une certaine distance horizontale et le dispositif de support (34) étant placé avec son extrémité opposée à l'outil de travail sur la première fixation (50) et étant guidé dans une rainure longitudinal (54) dirigée verticalement, fermée de toutes parts, prévue sur la seconde fixation (52), caractérisée en ce que l'extrémité du dispositif de support (34) est placée dans la première fixation (50) de façon à y être mobile en hauteur.

2. Machine agricole selon la revendication 1, caractérisée en ce que la première fixation (50) comporte une rainure longitudinale (56) dirigée verticalement pour la réception de l'extrémité du dispositif de support (34).

3. Machine agricole selon la revendication 2, caractérisée en ce que l'extrémité du dispositif de support (34) est réalisée sous la forme d'une bride (70) s'étendant à travers la rainure longitudinale (56) de la première fixation (50) placée en arrière par référence au sens de déplacement de la machine, qui comporte un élément de blocage (72) qui empêche un déplacement vers l'avant du dispositif de support (34).

4. Machine agricole selon la revendication 2, caractérisée en ce qu'un bord de délimitation inférieur (64) de la rainure longitudinale (54) de la seconde fixation (52) est disposé dans une direction inclinée par rapport à la surface d'appui de la moissonneuse-batteuse (10).

FIG.1

FIG.2

FIG. 3